# EUROPÄISCHE PATENTSCHRIFT

(11) **EP 2 987 912 B1**
(45) Veröffentlichungstag und Bekanntmachung des Hinweises auf die Patenterteilung: **31.05.2017**
(21) Anmeldenummer: 15181355.7
(22) Anmeldetag: 18.08.2015
(51) Int. Cl.: E01C 23/088, B65G 41/00, B65G 67/22

(54) **SELBSTFAHRENDE FRÄSMASCHINE, SOWIE VERFAHREN ZUM ABLADEN VON FRÄSGUT**
SELF-PROPELLED MILLING MACHINE, AND METHOD FOR UNLOADING MILLED MATERIAL
FRAISEUSE AUTOMOBILE, ET PROCÉDÉ D'ÉVACUATION DE PRODUIT DE FRAISAGE

(30) Priorität: 22.08.2014 DE 102014216763
(43) Veröffentlichungstag der Anmeldung: 24.02.2016
(73) Patentinhaber: Wirtgen GmbH, 53578 Windhagen (DE)
(72) Erfinder: Berning, Christian, 53909 Zülpich (DE); Kröll, Harald, 53572 Unkel (DE); Winkels, Sebastian, 51570 Windeck (DE); Krista, Tobias, 53123 Bonn (DE); Barimani, Cyrus, 53639 Königswinter (DE); Hähn, Günter, 53639 Königswinter (DE)
(74) Vertreter: dompatent von Kreisler Selting Werner - Partnerschaft von Patent- und Rechtsanwälten mbB

(56) Entgegenhaltungen:
- EP-A2- 1 959 056
- DE-A1-102012 215 013

## Beschreibung

Die Erfindung betrifft eine selbstfahrende Fräsmaschine nach dem Oberbegriff des Anspruchs 1, sowie ein Verfahren zum Abladen von Fräsgut nach dem Oberbegriff des Anspruchs 11 und eine Straßen- oder Bodenbearbeitungseinheit nach Anspruch 15.

Bei einer selbstfahrenden Fräsmaschine ist es bekannt, das Fräsgut auf mindestens ein Transportfahrzeug mit einer Ladefläche abzuladen.

Die Fräsmaschine weist eine Steuerung für den Fahr- und Fräsbetrieb auf sowie eine Arbeitswalze zum Fräsen z. B. eines Straßenbelages. Vor oder hinter der Arbeitswalze - in Fahrtrichtung gesehen - befindet sich eine Transportbandeinrichtung, z. B. eine Transportbandeinrichtung mit mindestens einem Transportband. Die Transportbandeinrichtung weist ein Abwurfende auf, an dem das Fräsgut aufgrund der Fördergeschwindigkeit über eine Flugbahn in Form einer Wurfparabel auf die Ladefläche des mindestens einen Transportfahrzeugs abgeladen wird. Das in Transportrichtung letzte oder einzige Transportband der Transportbandeinrichtung kann relativ zur Längsachse der Fräsmaschine seitlich unter einem vorgebbaren Schwenkwinkel nach links oder rechts verschwenkt werden und über einen vorgebbaren Höhenwinkel höhenverstellbar sein. Auch kann die Fördergeschwindigkeit des Transportbandes einstellbar sein.

Im praktischen Betrieb entstehen Probleme bei der Koordination der Fräsmaschine mit dem Transportfahrzeug.

Beispielsweise wird bei einer Vorderlader-Fräsmaschine das Fräsgut nach vorne auf das vorausfahrende Transportfahrzeug abgeworfen. Die Bedienungsperson für die Fräsmaschine muss dem Fahrzeugführer des Transportfahrzeuges signalisieren, wann sich das Transportfahrzeug weiter nach vorne bewegen und wann es anhalten soll. Dies führt zu Problemen, weil sich die Bedienungsperson im Grunde genommen auf den Fräsbetrieb konzentrieren muss und gleichzeitig eine Kollision mit dem vorausfahrenden Transportfahrzeug vermeiden muss.

Ein weiteres Problem besteht darin, dass die Bedienungsperson für die Fräsmaschine auch die Beladung der Ladefläche durch Verstellung des Schwenkwinkels, des Höhenwinkels und der Fördergeschwindigkeit des in Transportrichtung letzten oder einzigen Transportbandes der Transportbandeinrichtung übernehmen muss und dadurch von seiner eigentlichen Aufgabe, den Fräsbetrieb durchzuführen, abgelenkt wird.

Auch im Falle einer Hinterlader-Fräsmaschine bestehen Probleme bei der Koordination der Fräsmaschine mit dem Transportfahrzeug, zumal das Transportfahrzeug in Rückwärtsfahrt hinter der Fräsmaschine hinterherfahren muss. Für die Bedienungsperson der Fräsmaschine ergibt sich eine noch höhere Belastung, da sie einerseits den Fräsbetrieb in Vorwärtsfahrt steuern muss und andererseits die Beladung des Transportfahrzeugs in Fahrtrichtung hinter der Fräsmaschine beobachten muss, den Schwenkwinkel, den Höhenwinkel und/oder die Fördergeschwindigkeit der Transportbandeinrichung steuern muss und dem Fahrzeugführer die notwendigen Informationen vermitteln muss.

Es ist aus der DE 10 2012 215 013 A bekannt, dass eine Erfassungs- und Steuereinheit die Lage der Ladefläche und/oder des Transportbandes einer Transportbandeinrichtung fortlaufend mit Hilfe eines Bildaufnahmesystems, orten kann, wobei die Bilddaten zur Lagebestimmung der Ladefläche in Relation zum Maschinenrahmen oder zu dem schwenkbaren Transportband dienen.

Die Positionierung des Fräsgutes auf der Ladefläche kann derart von der Erfassungs- und Steuereinheit fortlaufend automatisch gesteuert werden, dass das Fräsgut auf die Mitte der Ladefläche oder eine andere vorgebbare Auftreffstelle innerhalb der Ladefläche abgeworfen wird.

Im praktischen Betrieb der Fräsmaschine kann das Bildaufnahmesystem durch Witterungsbedingungen, durch Baumäste, durch Blendung oder sonstige Einflüsse gestört sein und dadurch die automatische Steuerung zumindest vorübergehend beeinträchtigen.

Der Erfindung liegt daher die Aufgabe zugrunde, eine selbstfahrende Fräsmaschine, sowie ein Verfahren zum Abladen von Fräsgut einer Fräsmaschine anzugeben, die die Zuverlässigkeit der Steuerung verbessern und Fehlsteuerungen vermeiden soll.

Zur Lösung dieser Aufgabe dienen die Merkmale der Ansprüche 1, 11 bzw. 15.

Die Erfindung sieht in vorteilhafter Weise vor, dass die Erfassungs- und Steuereinheit eine Analyseeinrichtung aufweist, die Störungen oder Fehler im Abbild analysiert.

Vorzugsweise ist vorgesehen, dass die Analyseeinrichtung im Falle von Störungen oder Fehlern ein Warn- oder Steuersignal erzeugt. Die Bedienungsperson der Fräsmaschine wird auf diese Weise frühzeitig darauf aufmerksam gemacht, ob eine Störung oder ein Fehler im Abbild festgestellt worden ist, so dass seine Aufmerksamkeit insbesondere hinsichtlich der Überwachung der automatischen Steuerung erhöht werden kann.

Das Steuersignal kann z. B. dazu verwendet werden, den Fräsbetrieb zu stoppen oder ein Notaussignal zu erzeugen.

Insbesondere kann vorgesehen sein, dass die Analyseeinrichtung eine Standbilddetektionseinrichtung aufweist, die den Ausfall oder eine zeitliche Veränderung der Bildsignale der Bildpixel des digitalen Abbildes überwacht.

Auf diese Weise wird die Bedienungsperson sofort bei einem Ausfall der Bildsignale oder bei einem Einfrieren der Bildsignale informiert oder direkt in die Steuerung der Fräsmaschine eingegriffen.

Die Standbilddetektionseinrichtung kann die zeitliche Veränderung aller oder eines Teils der Bildpixel des digitalen Abbildes überwachen.

Die Standbilddetektionseinrichtung kann auch die zeitliche Veränderung einer im Bildfeld befindlichen definiert veränderbaren Markierung überwachen. Die Markierung wird dabei beispielsweise ortsfest zu dem Maschinenrahmen oder ortsfest zu dem Transportband derart angeordnet, dass sie von dem Bildaufnahmesystem erfasst wird. Dabei ist die Markierung derart definiert gestaltet, dass das Bildaufnahmesystem die Markierung identifizieren und überwachen kann.

Die definierte Markierung kann z. B. durch Rotation ihr Erscheinungsbild zeitlich verändern, so dass im Falle eines Stillstandes der Rotation ein Standbild erkannt werden kann. Dies ist insbesondere hilfreich, wenn sich weder die Fräsmaschine noch das Transportfahrzeug bewegen.

Die Standbilddetektionseinrichtung kann alternativ auch das digitale Abbild zweier auf das gleiche Bildfeld gerichteter Sensoren vergleichen und zumindest ein Standbild dann detektieren, wenn eines der beiden Abbilder einfriert.

Nach einem bevorzugten Ausführungsbeispiel ist vorgesehen, dass die Analyseeinrichtung Bildpixel auf gleichbleibende Abbildinformationen überwacht und ein Warnsignal oder Steuersignal ausgibt, wenn ein Teil der Abbildinformation über eine vorgebbare Zeitspanne unverändert bleibt.

Es kann außerdem unabhängig von der Standbilddetektion vorgesehen sein, dass die Analyseeinrichtung mit Hilfe einer im Bildfeld befindlichen Markierung eine unerwünschte Lageveränderung des mindestens einen Sensors des Bildaufnahmesystems relativ zum Maschinenrahmen oder relativ zum Transportband detektiert. Diese Markierung kann von der Markierung zur Standbilderkennung verschieden sein. Befindet sich die Markierung innerhalb des Bildfeldes nicht an einer vorgegebenen Stelle, kann darauf geschlossen werden, dass der Sensor bzw. das Bildaufnahmesystem seine ursprüngliche Position z. B. aufgrund einer Kollision mit einem Gegenstand verändert hat, und dass das Bildfeld nicht mehr das ursprünglich vorgesehene Bildfeld erfasst.

Nach einer weiteren Weiterbildung der Erfindung ist vorgesehen, dass die Analyseeinrichtung zur Feststellung einer Blendung das Vorliegen eines Maximalsignals bei zumindest einem Teil der Bildpixel überwacht und im Falle einer Blendung ein Warnsignal oder ein Steuersignal ausgibt.

Dabei kann im Falle einer Blendung eine elektronische oder optische Abblendung des Sensors erfolgen.

Bei einem alternativen Ausführungsbeispiel ist vorgesehen, dass die Erfassungsund Steuereinheit im Falle einer Blendung den Sensor um einen kleinen Winkelbetrag verschwenkt, ohne das erfasste Bildfeld wesentlich zu verändern.

Außerdem können die Bilddaten dahingehend analysiert werden, wie und in welchem Umfang die Ladefläche befüllt ist. Durch Steuerung der Fördergeschwindigkeit und/oder der Lage des Abwurfendes des Transportbandes, bzw. der Auftreffstelle des Fräsgutes relativ zur Ladefläche kann die Ladefläche gleichmäßig beladen werden. Der Befüllungszustand auf der Ladefläche kann von einem Bildaufnahmesystem erfasst und analysiert werden und die Fördergeschwindigkeit und/oder die Lage des Abwurfendes des Transportbandes relativ zur Ladefläche fortlaufend gesteuert werden, um die Ladefläche gleichmäßig und/oder nach einem vorgegebenen Beladungsprogramm zu beladen.

Zur Lösung der Aufgabe dienen auch die Merkmale des Anspruchs 11.

Nach dem erfindungsgemäßen Verfahren ist vorgesehen, dass zum Abladen von abgearbeitetem Fräsgut einer selbstfahrenden Fräsmaschine auf eine Ladefläche eines Transportfahrzeuges, bei dem die Fräsmaschine für den Fahr- und Fräsbetrieb gesteuert wird, das von einer Arbeitswalze abgearbeitete Fräsgut mit einem schwenkbaren Transportband auf die Ladefläche eines Transportfahrzeugs abgeworfen wird, wobei die veränderliche Lage der Ladefläche des Transportfahrzeugs relativ zum Maschinenrahmen oder relativ zum Transportband fortlaufend von einer Erfassungs- und Steuereinheit mit einem Bildaufnahmesystem überwacht wird, mit dem fortlaufend mindestens ein digitales Abbild zumindest von der Ladefläche erzeugt wird.

Es kann vorgesehen sein, dass zur Detektion einer partiellen Störung im Abbild eine Gruppe von zusammenhängenden Bildpixeln auf gleichbleibende Bildinformationen überwacht wird und ein Warnsignal oder ein Steuersignal ausgegeben wird, wenn ein Teil der Abbildinformation, z. B. eine Gruppe von zusammenhängenden Bildpixeln über eine vorgebbare Zeitspanne unverändert bleibt, oder dass vorübergehende Störungen oder Fehler der Bildinformation durch Erfassen eines Feldes zusammenhängender Bildpixel und/oder deren Fokussierstatus und/oder der Bewegungsrichtung der zusammenhängenden Bildpixel innerhalb des Bildfeldes analysiert werden.

Im Folgenden werden unter Bezugnahme auf die Zeichnungen Ausführungsbeispiele der Erfindung näher erläutert.

Es zeigen:
- Fig. 1: eine Vorderlader-Straßenfräsmaschine,
- Fig. 2: eine Hinterlader-Straßenfräsmaschine,
- Fig. 3: eine Draufsicht auf eine Fräsmaschine gemäß Fig. 1, und

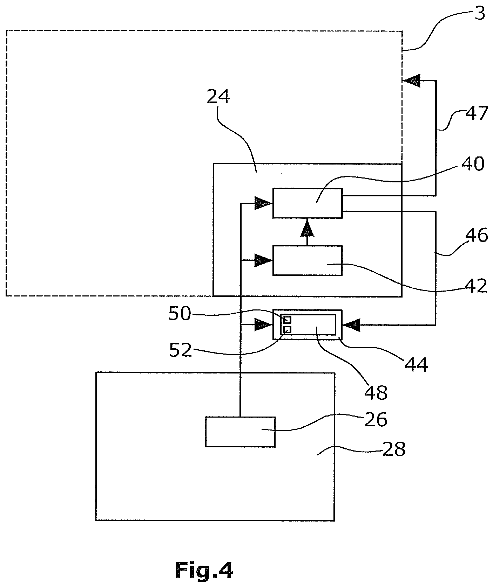

- Fig. 4: ein Schaltbild der Steuerung und des Bildaufnahmesystems.

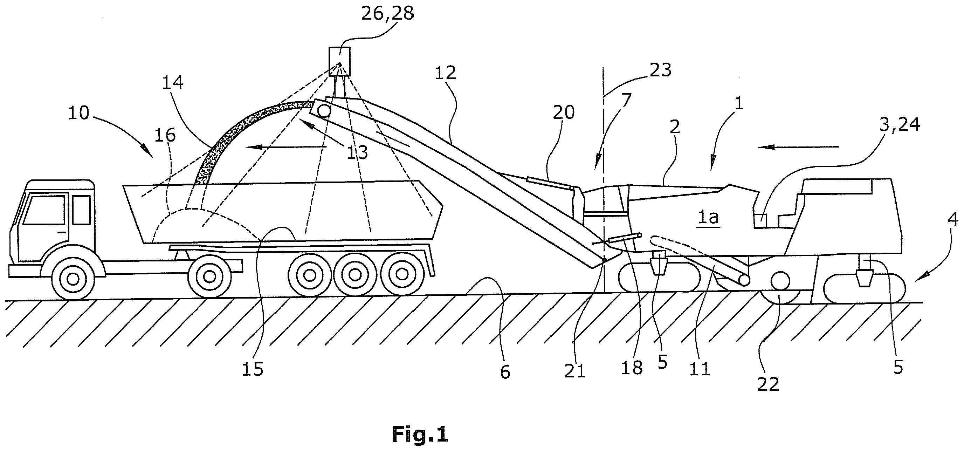

Fig. 1 zeigt eine Fräsmaschine am Beispiel einer Vorderlader-Straßenfräsmaschine 1a. Die Straßenfräsmaschine 1 weist einen Maschinenrahmen 2 auf, der von einem beispielsweise aus Kettenlaufwerken oder Rädern bestehenden Fahrwerk 4 getragen wird, das über mindestens drei Höhenverstelleinrichtungen in Form von Hubsäulen 5 mit dem Maschinenrahmen 2 verbunden ist. Wie aus Fig. 1 ersichtlich, sind bei dem Ausführungsbeispiel vier Hubsäulen 5 vorgesehen, mit denen der Maschinenrahmen 2 in eine vorgebbare Ebene gebracht werden kann, die vorzugsweise parallel zur Straßenoberfläche 6 verläuft, auf denen die Kettenlaufwerke oder Räder des Fahrwerks 4 stehen.

Die in Fig. 1 gezeigte Straßenfräsmaschine weist eine Arbeitswalze 22 in Längsrichtung der Fräsmaschine 1a zwischen den Kettenlaufwerken des Fahrwerks 4 auf.

Die Fräsmaschinen 1a, 1b können Kettenlaufräder und/oder Räder aufweisen. Die Arbeitswalze kann über die den Maschinenrahmen 2 tragenden Hubsäulen 5 oder relativ zu dem Maschinenrahmen 2 höhenverstellbar sein.

Andere Bauformen einer Fräsmaschine 1b können die Arbeitswalze 22 beispielsweise auch in Höhe der hinteren Kettenlaufwerke oder Räder des Fahrwerks 4 aufweisen.

Ebenso kann die Transportbandeinrichtung mit mindestens einem Transportband 11,12 zum Abtransport des abgefrästen Fräsgutes am vorderen 7 oder hinteren Ende 8 der Fräsmaschine 1a, 1b angeordnet sein.

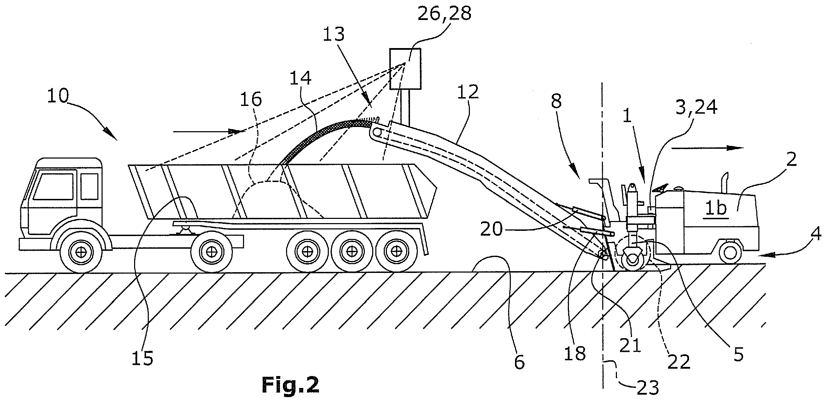

Fig.2 zeigt das Beispiel einer Hinterlader-Fräsmaschine 1b, bei der das Transportfahrzeug 10 in Rückwärtsfahrt hinter der Fräsmaschine hinterherfährt.

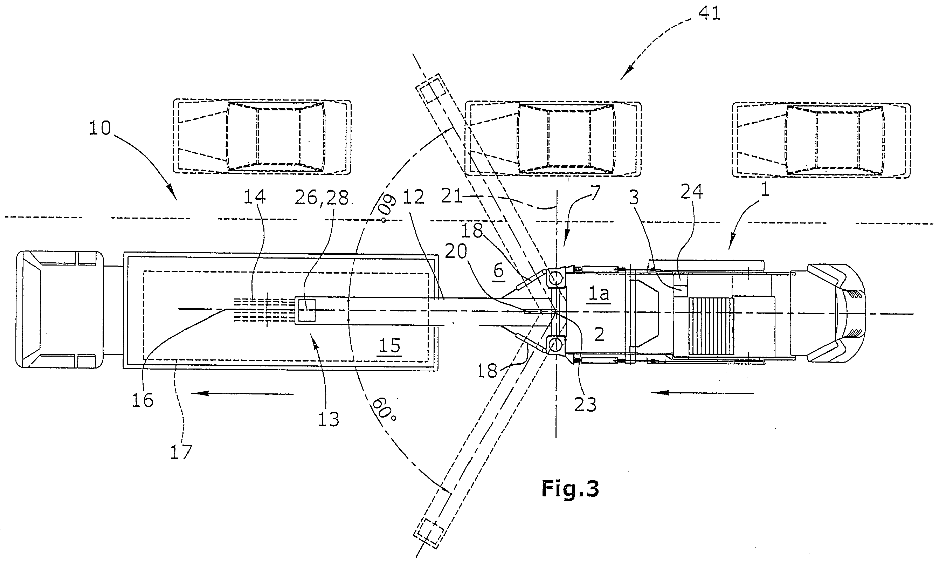

Sofern seitlich neben der Fräsmaschine 1a, 1b ausreichend Platz zur Verfügung steht, kann das Transportfahrzeug 10, wie in Fig. 3 gezeigt, auch in Vorwärtsfahrt neben der Fräsmaschine 1 bewegt werden. Die Fahrtrichtungen der jeweiligen Fahrzeuge sind in den Fign. 1 bis 3 jeweils durch Pfeile angezeigt.

Bei dem Ausführungsbeispiel der Fig. 1 wird das von der Arbeitswalze 22 abgefräste Fräsgut über ein erstes ortsfestes Transportband 11 der Transportbandeinrichtung, das das Fräsgut 14 auf ein zweites schwenkbares Transportband 12 überträgt, auf die Ladefläche 15 des Transportfahrzeugs 10 abgeladen. Aufgrund der Geschwindigkeit des Transportbandes 12 wird das Fräsgut 14 nicht unmittelbar am Ende des Transportbandes 12 abgeladen, sondern das Fräsgut folgt einer Wurfparabel, so dass die Auftreffstelle 16 auf der Ladefläche 15 mit Abstand von dem freien Ende 13 des Transportbandes 12 befindlich ist. Das Transportband 12 kann aus einer Mittelposition heraus nach links oder nach rechts über Kolben-Zylindereinheiten 18 verschwenkt werden, um das Fräsgut 14 auch bei Kurvenfahrt bzw. bei spurversetztem Fahren des Transportfahrzeugs 10 auf die Ladefläche 15 abladen zu können. Des Weiteren kann der Fahrzeugführer der Fräsmaschine 1a, 1b den Höhenwinkel des Transportbandes 12 mit Hilfe einer KolbenZylindereinheit 20 einstellen. Der Höhenwinkel beeinflusst ebenso wie die Fördergeschwindigkeit des Transportbandes 12, die Wurfparabel des Fräsgutes 14 und die Position der Auftreffstelle 16.

Der aktuell eingestellte Höhenwinkel um eine horizontale erste Achse 21 bzw. Schwenkwinkel um eine vertikale zweite Achse 23 wird an ein Erfassungs- und Steuerungssystem 24 gemeldet, das des Weiteren mindestens ein Bildaufnahmesystem 28 mit mindestens einem Sensor 26 aufweist oder mit diesem verbunden ist, der die Lage der Ladefläche 15 und/oder des Transportbandes 12 fortlaufend detektiert. Dieser mindestens eine Sensor 26 kann beispielsweise an der Fräsmaschine 1a, 1b an dem dem Transportband 12 zugewandten Ende und/oder an dem freien Ende 13 des Transportbandes 12 angeordnet sein. Des Weiteren kann der Sensor 26 vorzugsweise ein Bildsensor unterhalb, oder wie in den Figuren gezeigt, oberhalb des Transportbandes 12, sowie auch seitlich beiderseits des Transportbandes 12, angeordnet sein.

Die Erfassungs- und Steuereinheit 24 erfasst die Lage der Ladefläche 15 und/oder des in Transportrichtung letzten oder einzigen Transportbandes 12 fortlaufend mit Hilfe eines Bildaufnahmesystems 28 oder eines nicht optischen elektronischen Ortungssystems, das Daten zur Lagebestimmung der Ladefläche 15 in Relation zu dem Maschinenrahmen 2 oder zu dem Transportbandes 12 liefert. Das mindestens eine digitale Abbild 48 des Bildaufnahmesystems 28 kann durch für sich bekannte Bildanalysemethoden ausgewertet werden.

Die Erfassungs- und Steuereinheit 24 kann in die Steuerung 3 für den Fahr- und Fräsbetrieb integriert sein oder mit dieser zumindest verbunden sein, um ggf. auch Daten über die Fahrgeschwindigkeit und/oder einen detektierten Lenkwinkel der Fräsmaschine 1a,1b und die Fördergeschwindigkeit des Transportbandes 12 zu erhalten.

Die Erfassungs- und Steuereinheit 24 ortet die veränderliche Lage der Ladefläche 15 des Transportfahrzeugs 10 und des Transportbandes 12 relativ zum Maschinenrahmen 2 und kann die Positionierung der Auftreffstelle 16 des Fräsgutes 14 über den Schwenkwinkel und/oder den Höhenwinkel und/oder die Fördergeschwindigkeit des Transportbandes 12 fortlaufend und automatisch steuern, so dass das abgeworfene Fräsgut 14 zumindest innerhalb der Ladefläche 15 auftrifft. Alternativ kann auch die veränderliche Lage der Ladefläche 15 des Transportfahrzeugs 10 relativ zu dem Transportband 12 fortlaufend geortet werden, um die vorzugsweise automatische Steuerung durchzuführen.

Zur Verbesserung der Zuverlässigkeit der Steuerung und zur Vermeidung von Fehlsteuerungen weist die Erfassungs- und Steuereinheit 24 eine Analyseeinrichtung 40 auf, die Störungen oder Fehler im digitalen Abbild 48, das von den Bildaufnahmesystem 28 mit mindestens einem Sensor 26 erzeugt wird, analysiert.

Das Bildaufnahmesystem 28 kann nämlich durch Witterungsbedingungen, beispielweise durch störende Äste von Bäumen, durch Blendung oder auch durch Strom- und Systemausfall gestört sein, so dass dadurch die automatische Steuerung der Maschine und insbesondere die automatische Schwenkwinkelsteuerung des Transportbandes 12 zumindest vorrübergehend beeinträchtigt sein kann.

Die Analyseeinrichtung 40 kann die vom Sensor 26 erzeugten Bildpixel des digitalen Abbildes 48 analysieren und im Falle von Störungen oder festgestellten Fehlern ein Warn- oder Steuersignal 46 erzeugen, das die Steuerung 3 direkt beeinflussen kann, oder ein akustisches oder optisches Warnsignal, z. B. auf einem Monitor 44, erzeugen, der das digitale Abbild 48 für die Bedienungsperson der Fräsmaschine 1 wiedergibt.

Im Falle eines Warnsignals kann die Aufmerksamkeit der Bedienungsperson herbeigeführt werden, so dass die Bedienungsperson die automatische Steuerung beim Vorliegen eines Warnsignals 46 überprüfen und überwachen kann.

Alternativ kann über ein von der Analyseeinrichtung 40 erzeugtes Steuersignal 47 auch direkt in die Steuerung 3 eingegriffen werden, um beispielsweise den Fräsbetrieb zu stoppen, oder das Transportband 12 zu stoppen, oder ein Notaussignal zu erzeugen.

Die Analyseeinrichtung 40 kann außerdem mit einer Standbilddetektionseinrichtung 42 verbunden sein, die den Ausfall, oder eine zeitliche Veränderung der Bildsignale der Bildpixel des Sensors 26 im digitalen Abbild 48 überwacht.

Die Standbilddetektionseinrichtung 42 kann auch die zeitliche Veränderung einer im Bildfeld des digitalen Abbildes 48 befindlichen definiert veränderbaren Markierung 50 überwachen. Die Markierung 50 soll sich zeitlich in einen vorgegebenen Rhythmus verändern, so dass ein Standbild identifiziert werden kann, wenn diese Veränderung der Markierung 50 in dem definierten Ausschnitt des Bildfeldes nicht stattfindet.

Liegen zwei auf das gleiche Bildfeld gerichtete Sensoren 26 vor, kann auch ein Standbild detektiert werden, wenn sich das Abbild 48 des einen Sensors von dem anderen Abbild 48 des zweiten Sensors unterscheidet.

Unabhängig von der Standbilddetektion kann auch die Analyseeinrichtung 40 die Bildpixel des mindestens einen Sensors 26 auf gleichbleibende Abbildinformationen überwachen und ein Warnsignal oder Steuersignal 46 ausgeben, wenn ein Teil der Abbildinformationen über eine vorgegebene Zeitspanne unverändert bleibt. Dies kann beispielsweise geschehen, wenn ein Teil des Sensors 26 z. B. durch ein Blatt verdeckt ist.

Des Weiteren kann unabhängig von der Standbilddetektion mit Hilfe der Analyseeinrichtung 40 analysiert werden, ob eine unerwünschte Lageveränderung des mindestens einen Sensors 26 vorliegt.

Hierzu kann eine zweite Markierung 52 im Bildfeld des Abbildes 48 vorgesehen sein, dessen Koordinaten innerhalb des Bildfeldes überwacht werden. Verändert sich die Position der Markierung 52 innerhalb des Bildfeldes, hat sich der Bildsensor 26, z. B. durch Kollision mit einem Gegenstand, verändert.

Es versteht sich, dass für diese Zwecke auch die veränderliche Markierung 50 verwendet werden kann.

Die Markierungen 50, 52 sind ortsfest an dem Maschinenrahmen oder ortsfest zu dem Transportband derart angeordnet, dass sie von dem Bildfeld des Sensors 26 erfasst werden.

Die Analyseeinrichtung 40 kann ebenfalls unabhängig von der Standbilddetektion feststellen, ob eine Blendung des Bildaufnahmesystems 28 vorliegt. Hierzu wird das Maximalsignal bei zumindest einem Teil der Bildpixel überwacht, wobei die Analyseeinrichtung 40 im Falle einer Blendung ein Warnsignal oder ein Steuersignal ausgibt.

Im Falle einer Blendung kann eine elektronische oder optische Abblendung des Sensors 26 bzw. dessen optischen Systems erfolgen.

Alternativ kann im Falle der Blendung auch vorgesehen sein, dass der Sensor 26, bzw. eine Kamera, in der der Sensor 26 enthalten ist, um einen kleinen Winkelbetrag verschwenkt wird, ohne dass das erfasste Bildfeld wesentlich verändert wird. Diese geringfügige Schwenkbewegung kann bei Wegfall der Blendung wieder aufgehoben werden.

Es versteht sich, dass der Sensor 26 bzw. das Bildaufnahmesystem 28 in der in den Figuren 1 und 2 gezeigten Position oberhalb des Transportbandes 12 nur schematisch dargestellt ist, und dass das Bildaufnahmesystem 28 auch unterhalb oder seitlich des Transportbandes 12 oder an der Fräsmaschine 1 angeordnet sein kann.

Insbesondere können auch zwei Bildaufnahmesysteme 28 beiderseits des Transportbandes 12 angeordnet sein und/oder ein Bildaufnahmesystem 28 verwendet werden, das eine Stereokamera aufweist.

Dabei können die Kamerasysteme Optiken (Fisheye-Objektive) aufweisen, die einen Bildwinkel bis zu 180° zulassen, oder mit Objektiven mit veränderlicher Brennweite versehen sein.

Die Erfassungs- und Steuereinheit 24 kann auch die Aufgabe übernehmen, die Ladefläche 15 gleichmäßig zu befüllen. Hierzu kann ein Beladungsprogramm vorgesehen werden, um die Ladefläche 15 nach einem vorbestimmten Programm zu beladen. Dabei kann der Befüllungszustand auf der Ladefläche 15 von dem Bildaufnahmesystem 28 erfasst und analysiert werden, um die Fördergeschwindigkeit und/oder die Lage des Abwurfendes 13 des Transportbandes 12 relativ zur Ladefläche 15 fortlaufend zu steuern.

## Patentansprüche

1. Selbstfahrende Fräsmaschine (1a,1b),
- mit einem Maschinenrahmen (2),
- mit einer Steuerung (3) für den Fahr- und Fräsbetrieb,
- mit einer Arbeitswalze (22),
- mit einem relativ zum Maschinenrahmen (2) schwenkbaren Transportband (12),
- wobei das Transportband (12) das Fräsgut auf eine Ladefläche (15) eines Transportfahrzeuges (10) ablädt,
- wobei die Steuerung (3) eine Erfassungs- und Steuereinheit (24) aufweist, die die veränderliche Lage der Ladefläche (15) des Transportfahrzeugs (10) mit einem Bildaufnahmesystem (28) mit mindestens einem Sensor (26) überwacht, das fortlaufend mindestens ein digitales Abbild (48) zumindest von der Ladefläche (15) erzeugt,
**dadurch gekennzeichnet, dass**
die Erfassungs- und Steuereinheit (24) eine Analyseeinrichtung (40) aufweist, die Störungen oder Fehler in dem von dem mindestens einen Sensor (26) erzeugten Abbild (48) feststellt.

2. Fräsmaschine nach Anspruch 1, **dadurch gekennzeichnet, dass** die Analyseeinrichtung (40) im Falle von Störungen oder Fehlern ein Warn-oder Steuersignal (46, 47) erzeugt.

3. Fräsmaschine (1a, 1b) nach Anspruch 1 oder 2, **dadurch gekennzeichnet, dass** die Analyseeinrichtung (40) eine Standbilddetektionseinrichtung (42) aufweist.

4. Fräsmaschine (1a, 1b) nach Anspruch 3, **dadurch gekennzeichnet, dass** die Standbilddetektionseinrichtung (42) die zeitliche Veränderung aller oder eines Teils der Bildpixel des mindestens einen digitalen Abbildes (48) überwacht.

5. Fräsmaschine nach Anspruch 3 oder 4, **dadurch gekennzeichnet, dass** die Standbilddetektionseinrichtung (42) die zeitliche Veränderung einer im Bildfeld des Abbildes (48) befindlichen definiert veränderbaren Markierung (50) überwacht.

6. Fräsmaschine (1a,1b) nach einem der Ansprüche 1 bis 5, **dadurch gekennzeichnet, dass** die Analyseeinrichtung (40) Bildpixel auf gleichbleibende Abbildinformationen überwacht und ein Warnsignal oder Steuersignal (46) ausgibt, wenn zumindest ein Teil der Abbildinformation über eine vorgebbare Zeitspanne unverändert bleibt.

7. Fräsmaschine nach einem der Ansprüche 1 bis 6, **dadurch gekennzeichnet, dass** die Analyseeinrichtung (40) mit Hilfe einer im Bildfeld befindlichen Markierung (52) eine unerwünschte Lageveränderung des mindestens einen Sensors (26) des Bildaufnahmesystems (28) detektiert.

8. Fräsmaschine (1a, 1b) nach einem der Ansprüche 1 bis 7, **dadurch gekennzeichnet, dass** die Analyseeinrichtung (40) zur Feststellung einer Blendung das Vorliegen eines Maximalsignals bei zumindest einem Teil der Bildpixel überwacht und im Falle einer Blendung ein Warnsignal oder ein Steuersignal (46) ausgibt.

9. Fräsmaschine (1a, 1b) nach Anspruch 8, **dadurch gekennzeichnet, dass** im Falle einer Blendung eine elektronische oder optische Abblendung des mindestens einen Sensors (26) erfolgt.

10. Fräsmaschine (1a, 1b) nach Anspruch 8 oder 9, **dadurch gekennzeichnet, dass** die Erfassungs- und Steuereinheit (24) im Falle einer Blendung den Sensor (26) um einen kleinen Winkelbetrag verschwenkt, ohne das erfasste Bildfeld des Abbildes (48) wesentlich zu verändern.

11. Verfahren zum Abladen von abgearbeitetem Fräsgut (14) einer selbstfahrenden Fräsmaschine (1a, 1b) auf eine Auftreffstelle (16) auf einer Ladefläche (15) eines Transportfahrzeuges (10), bei dem
- die Fräsmaschine (1a, 1b) für den Fahr- und Fräsbetrieb gesteuert wird,
- das von einer Arbeitswalze (22) abgearbeitete Fräsgut (14) mit einem schwenkbaren Transportband (12) auf die Ladefläche (15) eines Transportfahrzeugs (10) abgeworfen wird, wobei die veränderliche Lage der Ladefläche (15) des Transportfahrzeugs (10) relativ zum Maschinenrahmen (2) oder relativ zum Transportband (12) fortlaufend von einer Erfassungs- und Steuereinheit (24) mit einem Bildaufnahmesystem (28) überwacht wird, mit dem fortlaufend mindestens ein digitales Abbild (48) zumindest von der Ladefläche (15) erzeugt wird,
**dadurch gekennzeichnet, dass**
Störungen oder Fehler im Abbild (48) durch eine Analyseeinrichtung (40) analysiert und festgestellt werden.

12. Verfahren nach Anspruch 11, **dadurch gekennzeichnet, dass** im Falle von Störungen oder Fehler im Abbild (48) ein Warnsignal (46) oder ein Steuersignal (47) erzeugt wird.

13. Verfahren nach Anspruch 11 oder 12, **dadurch gekennzeichnet, dass** zur Detektion eines Standbildes die zeitliche Veränderung aller oder eines Teils der Bildpixel überwacht wird.

14. Verfahren nach Anspruch 11 bis 13, **dadurch gekennzeichnet, dass** zur Detektion eines Standbildes die zeitliche Veränderung einer im Bildfeld des Abbildes (48) befindlichen definiert veränderbaren Markierung (50) überwacht wird.

15. Straßen- oder Bodenbearbeitungseinheit bestehend aus einer selbstfahrenden Fräsmaschine (1) und mindestens einem von der Fräsmaschine (1) unabhängig verfahrbaren und relativ zu der Fräsmaschine (1) derart positionierbaren Transportfahrzeug (10), dass das von der Fräsmaschine (1) abgearbeitete Fräsgut (14) auf das Transportfahrzeug (10) abladbar ist
**gekennzeichnet durch**
eine Fräsmaschine (1) mit den Merkmalen der Ansprüche 1 bis 10.

## Claims

1. Automotive milling machine (1a, 1b),
- comprising a machine frame (2),
- comprising a controller (3) for the travelling and milling operation,
- comprising a working drum (22),
- comprising a transport conveyor (12) slewable relative to the machine frame (2),
- where the transport conveyor (12) discharges the milled material onto a loading surface (15) of a transport vehicle (10),
- where the controller (3) comprises a detection and control unit (24) which monitors the alterable position of the loading surface (15) of the transport vehicle (10) by an image-recording system (28) comprising no less than one sensor (26) which continuously generates no less than one digital image (48) of, as a minimum, the loading surface (15),
**characterized in that**
the detection and control unit (24) comprises an analysis device (40) which detects faults or errors in the image (48) generated by the no less than one sensor (26).

2. Milling machine in accordance with claim 1, **characterized in that** the analysis device (40) generates a warning signal or control signal (46, 47) in the event of faults or errors.

3. Milling machine (1a, 1b) in accordance with claim 1 or 2, **characterized in that** the analysis device (40) comprises a frozen-image detection device (42).

4. Milling machine (1a, 1b) in accordance with claim 3, **characterized in that** the frozen-image detection device (42) monitors the alteration over time of all or of a part of the image pixels of the no less than one digital image (48).

5. Milling machine in accordance with claim 3 or 4, **characterized in that** the frozen-image detection device (42) monitors the alteration over time of a mark (50) present in the image field of the digital image (48) and alterable in a defined fashion.

6. Milling machine (1a, 1b) in accordance with one of the claims 1 to 5, **characterized in that** the analysis device (40) monitors image pixels for unchanging image information and issues a warning signal or control signal (46) if, as a minimum, a part of the image information remains unchanged over a specifiable period of time.

7. Milling machine in accordance with one of the claims 1 to 6, **characterized in that** the analysis device (40) detects, by a mark (52) present in the image field, an undesirable change in position of the no less than one sensor (26) of the image-recording system (28).

8. Milling machine (1a, 1b) in accordance with one of the claims 1 to 7, **characterized in that** the analysis device (40), for the detection of a glare, monitors the presence of a maximum signal in, as a minimum, a part of the image pixels and issues a warning signal or a control signal (46) in case of glare.

9. Milling machine (1a, 1b) in accordance with claim 8, **characterized in that**, in case of glare, an electronic or optical stopping-down of the no less than one sensor (26) is effected.

10. Milling machine (1a, 1b) in accordance with claim 8 or 9, **characterized in that** the detection and control unit (24), in case of glare, pivots the sensor (26) by a small angular amount without significantly changing the image field of the image (48) detected.

11. Method for discharging worked-off milled material (14) of an automotive milling machine (1a, 1b) onto a point of impingement (16) on a loading surface (15) of a transport vehicle (10), where
- the milling machine (1a, 1b) is controlled for the travelling and milling operation,
- the milled material (14) worked off by a working drum (22) is discharged onto the loading surface (15) of a transport vehicle (10) by means of a slewable transport conveyor (12), where the alterable position of the loading surface (15) of the transport vehicle (10) relative to the machine frame (2) or relative to the transport conveyor (12) is continuously monitored by a detection and control unit (24) comprising an image-recording system (28) which is used to continuously generate no less than one digital image (48) of, as a minimum, the loading surface (15),
**characterized in that**
faults or errors in the image (48) are analysed and detected by means of an analysis device (40).

12. Method in accordance with claim 11, **characterized in that**, in the event of faults or errors in the image (48), a warning signal (46) or a control signal (47) is generated.

13. Method in accordance with claim 11 or 12, **characterized in that**, for detection of a frozen image, the alteration over time of all or of a part of the image pixels is monitored.

14. Method in accordance with one of claims 11 to 13, **characterized in that**, for the detection of a frozen image, the alteration over time of a mark (50) present in the image field of the image (48) and alterable in a defined fashion is monitored.

15. Road or ground working unit comprising an automotive milling machine (1) and no less than one transport vehicle (10) movable independently of the milling machine (1) and positionable relative to the milling machine (1) in such a fashion that the milled material (14) worked off by the milling machine (1) is dischargeable onto the transport vehicle (10),
**characterized by**
a milling machine (1) comprising the features of claims 1 to 10.

## Revendications

1. Fraiseuse automotrice (1a, 1b),
- avec un châssis de machine (2) ;
- avec une commande (3) pour le mode en déplacement et pour le mode en cours de fraisage ;
- avec un cylindre de travail (22) ;
- avec une bande de transport (12) capable de pivoter par rapport au châssis de la machine (2) ;
- où la bande de transport (12) décharge le matériau fraisé sur une surface de chargement (15) d'un véhicule de transport (10) ;
- où la commande (3) présente une unité de commande et de reconnaissance (24) qui surveille la position variable de la surface de chargement (15) du véhicule de transport (10) au moyen d'un système de prise de vues (28) qui est doté d'au moins un capteur (26) et qui génère de manière continue au moins une image (48) numérique, tout au moins de la surface de chargement (15),
**caractérisée en ce que**
l'unité de commande et de reconnaissance (24) présente un mécanisme d'analyse (40) qui constate les défaillances ou les erreurs dans l'image (48) générée par l'au moins un capteur (26).

2. Fraiseuse selon la revendication 1, **caractérisée en ce que** le mécanisme d'analyse (40) génère un signal d'avertissement ou un signal de commande (46, 47) en cas de défaillances ou d'erreurs.

3. Fraiseuse (1a, 1b) selon la revendication 1 ou 2, **caractérisée en ce que** le mécanisme d'analyse (40) présente un mécanisme de détection avec arrêt sur image (42).

4. Fraiseuse (1a, 1b) selon la revendication 3, **caractérisée en ce que** le mécanisme de détection avec arrêt sur image (42) surveille la modification dans le temps de tous les pixels d'images ou d'une partie des pixels des images de l'au moins-une image (48) numérique.

5. Fraiseuse selon la revendication 3 ou 4, **caractérisée en ce que** le mécanisme de détection avec arrêt sur image (42) surveille la modification dans le temps d'un repère (50) modifiable de manière définie et se trouvant dans le champ de vision de l'image (48).

6. Fraiseuse (1a, 1b) selon l'une des revendications 1 à 5, **caractérisée en ce que** le mécanisme d'analyse (40) surveille les pixels des images, s'assurant notamment de la constance des informations relatives à l'image, et émet un signal d'avertissement ou un signal de commande (46) quand tout au moins une partie des informations relatives à l'image demeure inchangée sur une période de temps pouvant être prédéterminée.

7. Fraiseuse selon l'une des revendications 1 à 6, **caractérisée en ce que** le mécanisme d'analyse (40) détecte, à l'aide d'un repère (52) se trouvant dans le champ de vision, une modification non souhaitée de la position de l'au moins un capteur (26) du système de prise de vues (28).

8. Fraiseuse (1a, 1b) selon l'une des revendications 1 à 7, **caractérisée en ce que** le mécanisme d'analyse (40) destiné à la constatation d'un éblouissement surveille la présence d'un signal maximal pour tout au moins une partie des pixels des images et émet un signal d'avertissement ou un signal de commande (46) dans le cas d'un éblouissement.

9. Fraiseuse (1a, 1b) selon la revendication 8, **caractérisée en ce que**, dans le cas d'un éblouissement, la mise en place d'un diaphragme électronique ou optique de l'au moins un capteur (26) a lieu.

10. Fraiseuse (1a, 1b) selon la revendication 8 ou 9, **caractérisée en ce que**, dans le cas d'un éblouissement, l'unité de commande et de reconnaissance (24) bascule le capteur (26) sur une petite valeur angulaire, sans pour autant modifier sensiblement le champ de vision saisi de l' image (48).

11. Procédé destiné au déchargement de matériau fraisé (14) travaillé avec une fraiseuse automotrice (1a, 1b), sur un emplacement cible (16) d'une surface de chargement (15) d'un véhicule de transport (10), pour lequel :
- la fraiseuse (1a, 1b) est commandée selon le mode en déplacement et selon le mode en cours de fraisage ;
- le matériau fraisé (14) travaillé au moyen d'un cylindre de travail (22) est déversé sur la surface de chargement (15) d'un véhicule de transport (10) au moyen d'une bande de transport (12) capable de pivoter, où la position variable de la surface de chargement (15) du véhicule de transport (10) est surveillée par une unité de commande et de reconnaissance (24), par rapport au châssis de la machine (2) ou par rapport au bande de transport (12), de manière continue, ladite unité de commande et de reconnaissance (24) étant équipée d'un système de prise de vues (28), au moyen duquel au moins une image (48) numérique, tout au moins de la surface de chargement (15), est générée de manière continue,
**caractérisé en ce que**
les défaillances ou les erreurs dans l'image (48) sont analysées et constatées par un mécanisme d'analyse (40).

12. Procédé selon la revendication 11, **caractérisé en ce que**, en cas de défaillances ou d'erreurs dans l'image (48), un signal d'avertissement (46) ou un signal de commande (47) est généré.

13. Procédé selon la revendication 11 ou 12, **caractérisée en ce que** la modification dans le temps de tous les pixels d'images ou d'une partie des pixels des images est surveillée en vue de la détection d'un arrêt sur image.

14. Procédé selon l'une des revendications 11 à 13, **caractérisée en ce que** la modification dans le temps d'un repère (50) modifiable de manière définie et se trouvant dans le champ de vision de l'image (48) est surveillée en vue de la détection d'un arrêt sur image.

15. Unité de travail des voiries ou unité de travail du sol constituée d'une fraiseuse (1) automotrice et d'au moins un véhicule de transport (10) pouvant être positionné par rapport à la fraiseuse (1) et pouvant être déplacé indépendamment de la fraiseuse (1), de telle sorte que le matériau fraisé (14) travaillé par la fraiseuse (1) peut être déchargé sur le véhicule de transport (10),
**caractérisée par**
une fraiseuse (1) dotée des caractéristiques des revendications 1 à 10.
